# EUROPEAN PATENT APPLICATION

(11) **EP 0 831 289 A2**
(43) Date of publication of application: **25.03.1998**
(21) Application number: 97307212.7
(22) Date of filing: 17.09.1997
(51) Int. Cl.: F28D 20/02, F28D 15/02

(54) **Apparatus for controlling temperature**

(30) Priority: 18.09.1996 GB 9619449
(71) Applicant: ACTIONENERGY LIMITED, London N1 6EE (GB)
(72) Inventor: Gomez, Enrique Llorente, Colmenar Viejo, 28790 Madrid (ES)
(74) Representative: Cozens, Paul Dennis

(57) **Abstract**

An apparatus for controlling temperature within an equipment housing comprises: a plurality of thermal storage dcvices (10a-d) for location within the housing, each for exchanging heat between itself and the interior of the housing and between itself and a thermal transfer fluid, and each having first and second ports providing an inlet and outlet for the passage of the thermal transfer fluid therethrough; and a plurality of heat exchangers (12a-d) for location on top of the housing, each for exchanging heat between the thermal transfer fluid and the external environment, and each having first and second ports providing an inlet and outlet for the passage of the thermal transfer fluid therethrough. The first ports of the thermal storage devices are each primarily connected to a respective one of the first ports of the heat exchangers by a first pipe arrangement (16), and the second ports of the thermal storage devices are each primarily connected to a respective one of the second ports of the heat exchangers by a second pipe arrangement (14). In order to improve the overall rate of heat extraction from the housing when the heat given off by the equipment is not evenly distributed, the first pipe arrangement connects the first ports of the thermal storage devices not only to the first ports of the heat exchangers but also directly to one another and the second pipe arrangement connects the second ports of the heat exchangers not only to the second ports of the thermal storage devices but also directly to one another.

## Description

This invention relates to apparatus for controlling temperature within a housing, and particularly but not exclusively to apparatus for the passive cooling of equipment accommodated in such a housing. The invention also relates to a housing incorporating such an apparatus.

In many technical areas such as telecommunications, fibre-optic systems, meteorology, transmission and data control, it is necessary to keep electric or electronic equipment at remote locations. A desert environment is one typical location. The equipment is typically kept in a purpose-built, insulated, closed ambient housing (or shelter), often in adverse weather conditions. In order to ensure a high MTBF (mean time between failure) for such equipment, it is necessary to maintain the equipment at a near-constant temperature, and often between certain critical temperature limits. At these remote locations, an external power supply is usually not available, and the equipment may consequently be solar-powered *via* photovoltaic cells. However, the power from these cells is normally insufficient to power an active cooling apparatus, such as an air conditioning system. Hence passive cooling apparatus is required in order to control the temperature of the environment in the housing.

The invention relates in particular to an apparatus for controlling temperature within a housing, comprising: a plurality of thermal storage devices for location within the housing, each for exchanging heat between itself and the interior of the housing and between itself and a thermal transfer fluid, and each having first and second ports providing an inlet and outlet for the passage of the thermal transfer fluid therethrough; and a plurality of heat exchangers for location outside the housing, each for exchanging heat between the thermal transfer fluid and the external environment, and each having first and second ports providing an inlet and outlet for the passage of the thermal transfer fluid therethrough.

Such an apparatus is known from patent document GB-A-2,287,090. In that known apparatus, the heat exchangers are located on top of the housing, the first ports of the thermal storage devices are each connected to a respective one of the first ports of the heat exchangers, and the second ports of the thermal storage devices are each connected to a respective one of the second ports of the heat exchangers. Accordingly, a plurality of circuits are formed for the thermal transfer fluid. Although the circuits are connected by respective pipes to a common expansion and header tank, the circuits are, insofar as thermal transfer is concerned, independent.

Each thermal storage device may include a thermal storage medium in the form of a substance which changes its phase between solid and liquid at or near the desired temperature for the environment inside the housing. The thermal storage medium inside the thermal storage device absorbs and accumulates the heat given off from the equipment housed inside the container and the heat flowing through the walls during the hotter part of the day. At this time, no substantial heat transfer takes place between each heat exchanger and its respective thermal storage device because the thermal transfer fluid in the heat exchangers outside is warmer than the thermal transfer fluid in the thermal storage devices below, and accordingly the fluid does not circulate. However, at night time or at other times when the external environment is cooler than the internal environment, the colder fluid outside falls under gravity into the thermal storage devices, and cools down and regenerates (liquid to solid) the thermal storage medium inside the thermal storage devices. Hence, the thermal storage medium inside the thermal storage device is regenerated (liquid to solid) by selective heat transfer between the storage device and the external environment, the selectivity of the apparatus being reliant on the buoyancy force of natural convection of the thermal transfer fluid.

Whilst the apparatus described in GB-A-2,287,090 functions satisfactorily, it is known from patent document GB-A-2,294,755 that it can suffer certain problems in unfavourable circumstances.

In normal use of the apparatus described in GB-A-2,287,090, the static pressure is the same in each of the circuits because they are each connected to the common expansion tank. However, if the level of the thermal transfer fluid is lower than the level of the expansion tank (for example because of a leak in the system, because of insufficient filling of the system or due to poor installation work and incorrect connection of the expansion tank to the thermal transfer circuits), then the static pressures in the various thermal transfer circuits can diverge from one another, due to the different fluid levels which may arise in the circuits. This can be disadvantageous, since the circuits may then operate at different efficiencies. Also, if air bubbles become trapped in any of the fluid circuits, the efficiency of any circuit which is so affected may diminish with respect to the efficiency of the remainder of the circuits due to reduced flow of thermal transfer fluid in the affected circuit. This can also be disadvantageous.

To deal with this problem, the apparatus of GB-A-2,294,755 and the apparatus of the present invention have a pipe arrangement which connects the first ports of the thermal storage devices not only to the first ports of the heat exchangers but also directly to one another.

By providing such a pipe arrangement, the distribution of the pressures of the fluid inside the circuits is generally equalised so as to deal with the problem mentioned above with the apparatus described in GB-A-2,287,090. By equalising the pressure distributions inside the various circuits, their efficiencies tend to be equalised, despite the possible presence of an air bubble in one of the circuits. Secondly, the pipe arrangement can also equalise the levels of fluid in the various circuits, which can again tend to equalise the efficiencies of the circuits. In effect, the pipe arrangement affords a pressure reference line also in case the expansion tank cannot provide the fluid required by a particular circuit.

The present invention is concerned with improving further the apparatuses described in GB-A-2,287,090 and GB-A-2,294,755.

In accordance with the present invention, the apparatus has a second pipe arrangement having a trunk and a plurality of branches, each branch extending between the trunk and a respective one of the second ports so as to connect the second ports of the heat exchangers to the second ports of the thermal storage devices and directly to one another so as to enable cross-flow of the thermal transfer fluid between any of the heat exchangers and any of the thermal storage devices.

The first and second pipe arrangements therefore not only equalise pressures in the apparatus as is apparent from the known apparatuses, but also permit cross-flow of the thermal transfer fluid between one primary circuit and another through one of the pipe arrangements and return flow through the other pipe arrangement. Without this feature, if heat is unevenly generated by equipment in the housing so that a first one of the thermal storage devices becomes hotter than a second one, then during the night- or cooler-time, the heat exchanger associated with the second thermal storage device will remove heat from that thermal storage device at a lesser rate than the heat exchanger associated with the first thermal storage device. With the invention, however, in such circumstances, thermal transfer fluid can flow from the first thermal storage device to the second heat exchanger and back to the first thermal storage device. The resultant effect is that the second heat exchanger can assist in extracting heat from the first thermal storage device so that not only can heat be extracted at a greater rate from the hotter, first thermal storage device, but also the overall rate of heat extraction from all of the thermal storage devices is increased.

(It should be noted that although the effects of the invention have been described above and will be described below in relation to a heat extraction apparatus, the invention is also applicable to a heat supply apparatus.)

Preferably, the first pipe arrangement provides the lowest point for the thermal transfer fluid, and may be supplied with a cock for draining and/or pressure testing the apparatus.

Preferably, the first pipe arrangement is in the form of a first manifold having a trunk and a plurality of branches, one for each of the first ports.

Preferably, the second pipe arrangement extends towards the top of the apparatus so as to function as an expansion and header reservoir for the thermal transfer fluid. Accordingly, a separate expansion and header tank and its associated pipework, as described in GB-A-2,287,090 and GB-A-2,294,755, are not required. In this case, the trunk of the second pipe arrangement preferably has first and second filler openings in an upper surface thereof, the first filler opening communicating with a pipe which extends downwardly to an open lower end thereof. In use, the apparatus is filled with the thermal transfer fluid to a normal level which is above the lower end of the pipe and above the uppermost level of the interiors of the branches of the manifold. An anti-evaporation liquid, such as an oil, may then be added through the second filler opening so as to float on the surface of the thermal transfer fluid and prevent, or reduce the rate of, evaporation of the thermal transfer fluid. However, if the apparatus does require topping-up with thermal transfer fluid, it can be added through the first filler opening and the pipe to below the level of the anti-evaporation liquid (assuming that there has not been a massive loss of thermal transfer fluid) without disturbing the anti-evaporation liquid. Thus, the formation of an emulsion of the anti-evaporation liquid and the thermal transfer fluid can be prevented.

Preferably, the second pipe arrangement is in the form of a second manifold.

Preferably, each of the branches for the heat exchanger ports is paired with and adjacent a respective one of the branches for a respective one of the thermal storage device ports. Thus, each thermal storage device is in a primary circuit with a respective one of the heat exchangers, and preferably the adjacent branches of each pair lie in the same plane so that there is little resistance to flow of the thermal transfer fluid in each primary circuit. Also, in this case, the branches of each pair are preferably integral with at least a part of the, or the respective, trunk. For example, the branches may be of aluminium tube which is welded to the trunk (or part of it), the latter being of folded and welded aluminium sheet. These integral arrangements may be modular so that apparatuses with a variety of numbers of thermal storage devices and heat exchangers may be easily provided, and so that additional thermal storage devices and heat exchangers may be easily added to an existing apparatus.

Preferably, the heat exchangers, thermal storage devices and the or each trunk are elongate; the heat exchangers and thermal storage devices being generally parallel to each other and generally at right angles to the or each trunk.

Preferably, the internal cross-sectional area of the or each trunk is about the same as, or greater than, the internal cross-sectional area of each of the branches. In particular, in the case where the branches are of circular cross-section, the trunk of the first pipe arrangement may be of square cross-section having a side slightly greater than the diameter of the branches, and the trunk of the second pipe arrangement may be of rectangular cross-section having a width slightly greater than the diameter of the branches and a height substantially greater than the diameter of the branches so as to provide space for a head for and expansion of the thermal transfer fluid.

A specific embodiment of the present invention will now be described, by way of nonlimiting example, with reference to the drawings, in which:
- Figure 1: is a schematic side view of an apparatus according to the present invention fitted to a housing;
- Figure 2: is a view of an upper manifold of the apparatus of Figure 1 as seen in the direction II-II shown in Figure 1;

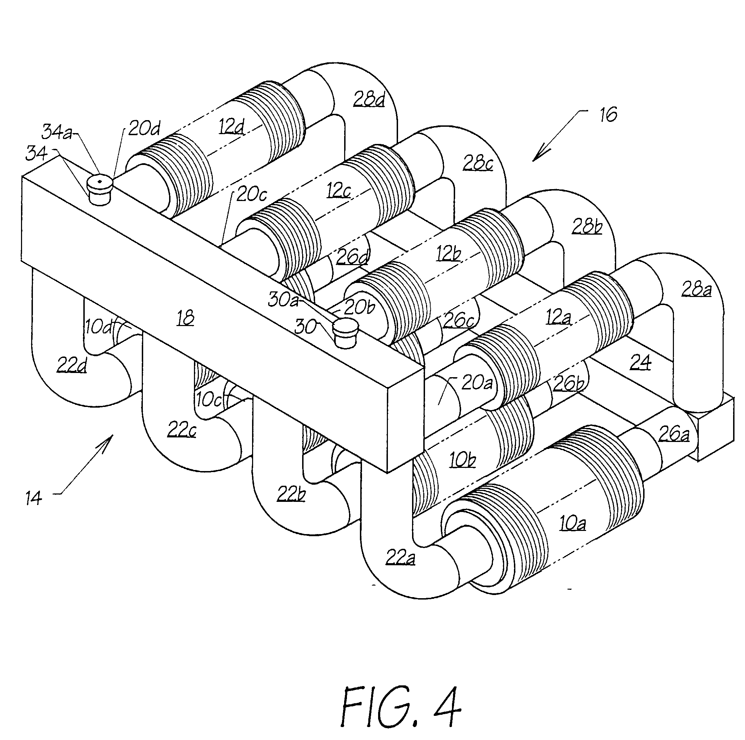

- Figure 3: is a view of a lower manifold of the apparatus of Figure 1 as seen in the direction III-III shown in Figure 1; and
- Figure 4: is a schematic isometric view of the apparatus of Figure 1.

Referring to the drawings, the temperature controlling apparatus comprises: four thermal storage devices 10a-d; four heat exchangers 12a-d; upper and lower pipe arrangements in the form of upper and lower manifolds 14, 16; and a thermal transfer fluid 36. The thermal storage devices 10a-d, heat exchangers 12a-d and thermal transfer fluid 36 are known *per se* and are as described in GB-A-2,287,090 and GB-A-2,294,755, to which reference should be made, and the contents of which are to be treated as incorporated in this specification.

The upper manifold 14 has: a rectangular cross-section trunk 18; four circular cross-section branches 20a-d which extend sideways and each of which is connected to one end of a respective one of the heat exchangers 12a-d; four circular cross-section branches 22a-d which extend downwards and then curve sideways each into connection with one end of a respective one of the thermal storage devices 10a-d; and a pair of rectangular end caps for the trunk 18. The lower manifold 16 has: a square cross-section trunk 24; four circular cross-section branches 26a-d which extend sideways and each of which is connected to the other end of a respective one of the thermal storage devices 10a-d; four circular cross-section branches 28a-d which extend upwards and then curve sideways each into connection with the other end of a respective one of the heat exchangers 12a-d; and a pair of square end caps for the trunk 24. Each of the thermal storage devices, e.g 10a, is generally in the same vertical plane as a respective one 12a of the heat exchangers and the respective manifold branches 20a, 22a, 26a, 28a, so that four primary circuits for the flow of the thermal transfer fluid 36 are formed. However, the trunks 18, 24 of the manifolds 14, 16 also permit cross-flow between the primary circuits, for example from thermal storage device 10a - through branch 22a, trunk 18 and branch 20b of the upper manifold 14 - through heat exchanger 12b - through branch 28b, trunk 24 and branch 26a of the lower manifold 16 - and back to thermal storage device 10a.

The manifold branches 20a-d, 22a-d, 26a-d, 28a-d are formed of aluminium tube and are welded to the manifold trunks 18, 24. The trunks 18, 24 are constructed of folded and welded aluminium sheet. The width and height of the lower manifold trunk 24 and the width of the upper manifold trunk 18 are slightly larger than the diameter of the branches 20a-d, etc. However, the height of the upper manifold trunk 18 is substantially larger (for example 50% to 100% larger) than the diameter of the branches 20a-d, etc, and the sideways extending branches 20a-d are positioned towards the bottom of the side of the trunk 18, so that an expansion and header reservoir 30 is formed by the upper manifold 14. The expansion and header reservoir allows for thermal expansion and contraction of the thermal transfer fluid and enables the apparatus to be filled with the thermal transfer fluid to a level above the uppermost level of the insides of the sideways extending branches 20a-d.

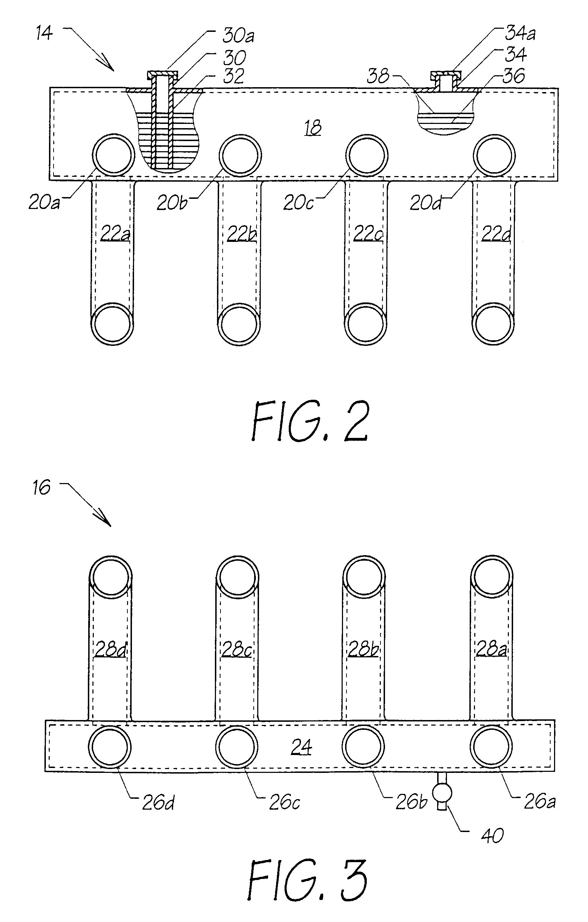

The trunk 18 of the uppcr manifold 14 has a first filler opening 30 in its upper surface, and, as shown in Figure 2, a pipe 32 is connected around the filler opening 30 and extends downwardly to an open end which is at a level which is below the normal uppermost level of the thermal transfer fluid 36. The first filler opening 30 is used for filling the apparatus with the thermal transfer fluid 36 and may be fitted with a filter (not shown) in the pipe 32. A non-vented filler cap 30a is provided for the first filler opening 30. The trunk 18 of the upper manifold 14 also has a second filler opening 34 in its upper surface, but without a pipe like the pipe 32 for the first filler opening 30. The second filler opening 34 is used for adding an anti-evaporation liquid to the apparatus, so that a film 38 of the anti-evaporation liquid forms on the upper surface of the thermal transfer fluid 36. A vented filler cap 34a is provided for the second filler opening 34. It will be appreciated that, if the thermal transfer fluid 36 does need topping-up, then provided the level of the thermal transfer fluid 36 has not fallen below the lower end of the pipe 32, fresh thermal transfer fluid can be added through the first filler opening 30 and will be introduced to the existing fluid below the film 38 of anti-evaporation liquid without having to break through the film 38, so that there is little risk of the anti-evaporation liquid being agitated and emulsified.

The trunk 24 of the lower manifold 16 is fitted in its lower surface with a cock 40 which can be used for draining the thermal transfer fluid 36 if and when that may be necessary, and for pressure testing the apparatus for example when it is being commissioned. Bleed valves may also be provided in the apparatus to assist in removing air bubbles from the apparatus when it is first set up or when it is refilled with thermal transfer fluid.

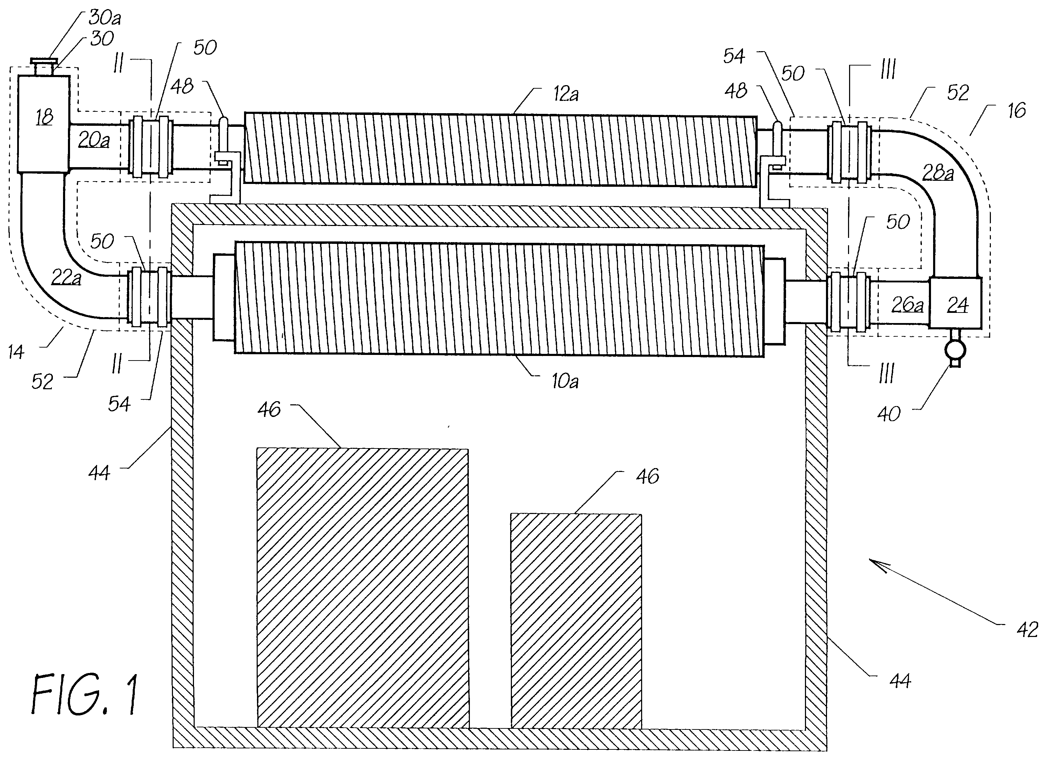

As can be seen from Figure 1, the control apparatus is incorporated into a closed, monolithic, box-shaped housing 42, a portion of the apparatus being inside the housing, and a portion being outside. The housing includes thermally insulated panels 44 which act as a shelter for electrical equipment 46. The panels are of a sandwich construction, the outer layers of the sandwich being aluminium or steel sheets, between which are sandwiched high-density, hot-injected, pressure-foamed polyurethane. They are held together by an aluminium or steel frame. The external part of the apparatus is retained on the housing by, amongst other means, brackets and clamps 48.

The thermal storage devices 10a-d and heat exchangers 12a-d are releasably connected to the manifold branches 20a-d, 22a-d, 26a-d, 28a-d by releasable couplings 50 made of reinforced rubber, each coupling being fastened by two or more clamps which in the preferred embodiment arc madc of steel. The manifolds 14, 16 are covered with thermally insulating material 52. The couplings 50 are also covered with thermally insulating material 54 which is not of a particularly heavy grade, and hence is easily removable to expose the releasable couplings 50.

It will be apparent that the manifolds 14, 16, heat exchangers 12a-d and thermal storage devices 10a-d are easily and repeatably removable. This is achieved by loosening the various clamps and couplings 50, and removing the manifolds 14, 16. The external heat exchangers 12a-d can then be removed very easily. The internal thermal storage devices 10a-d are configured to be easily removable each by being slid lengthways to its farthest extent. Its distal end is then released from its aperture in one of the panels 44. The device can then be removed by a combination of a pivotal and a sliding movement.

In the apparatus of the present invention, since the thermal transfer fluid 36 is essentially at atmospheric pressure, the couplings 50 do not need to be able to withstand any substantial pressure. Nevertheless, to prevent any possible leakage of the thermal transfer fluid 36 damaging the equipment 46 within the housing 42, any necessary releasable coupling is located outside the housing. There are no releasable couplings within the housing.

With the heat exchange devices of the apparatus of the present invention, no evaporator or condenser units are required, and hence the apparatus operates in a relatively simple fashion. The thermal transfer fluid 36 does not change phase during normal operation of the apparatus, and during normal operation the upper level of the thermal transfer fluid 36 is maintained substantially at ambient pressure by means of the trunk 18 of the upper manifold 14, which is vented to the atmosphere by the cap for the filler opening 34.

An important feature of each primary hydraulic circuit (for example provided by thermal storage device 10a, heat exchanger 12a and respective manifold branches 20a, 22a, 26a, 28a) in which the thermal transfer fluid flows 36 is that it is in the form of a single, continuous, roughly oval-shaped, planar loop. As viewed from within the loop, all the components of the loop are either straight or concave; there is no reverse curvature anywhere on the loop. This can ensure a satisfactory flow of thermal transfer fluid in the hydraulic circuit and can assist in the removal of air bubbles from the circuit. A further feature which can ensure satisfactory flow is that the pipework is of relatively large internal diameter, to minimise hydraulic losses. In order to ensure the uni-directionality of the flow, the thermal storage devices and heat exchangers are very slightly inclined with respcct to the horizonal (at an angle of perhaps 1 to 3°); alternatively the entire housing may be inclined at that same small angle.

The overall principles governing the operation of passive cooling apparatus have been described in relation to the known passive cooling apparatus. These principles also apply to the present invention. Other details of the present apparatus are as described in GB-A-2,287,090 and GB-A-2,294,755, to which reference should be made. The present invention represents an improvement over the known apparatuses in the following respects.

First, the manifold trunks permit cross-flow between the primary circuits, and this can increase the overall rate at which heat is exchanged between the thermal storage devices and the external environment. For example, in the case where device 10a has been subjected during the day to more heat from the equipment than device 10b (and assuming that the temperatures of the devices 10a-b do not stay exactly at the freezing/melting point of the thermal storage medium), then the average temperature during the night of device 10a will be greater than that of device 10b. Accordingly, during the night, device 10a will promote a faster and hotter flow of the thermal transfer fluid 36 than device 10b. Consequcntly, although the bulk of the flow of fluid from device 10a will pass through heat exchanger 12a, some of the flow of fluid from device 10a will pass through the upper manifold trunk 18 and into heat exchanger 12b, with a complementary flow of fluid from the heat exchanger 12b and through the lower manifold trunk 24 back to device 10a. Therefore, in these circumstances, heat exchanger 12b assists heat exchanger 12a in removing heat from device 10a so that the internal energies of the devices 10a-d tend to equalise more quickly during the night. Moreover, the overall rate of heat removal from the devices 10a-d is increased compared with the case where no cross-flow arises, as in the apparatuses described in GB-A-2,287,090 and GB-A-2,294,755.

Second, the manifold trunks 18, 24, being of large cross-section to facilitate cross-flow compared with the lower manifold described in GB-2,294,755-A, can naturally be constructed to have considerable strength, and the two manifolds 14, 16 together greatly increase the strength and rigidity of the apparatus compared with the apparatuses described in GB-A-2,287,090 and GB-A-2,294,755.

Third, the upper manifold 14, in addition to enabling cross-flow, can simply be designed, as described above, also to function as the expansion and header reservoir for the apparatus. Accordingly, there is no need for the separate tanks and associated pipework described in GB-A-2,287,090 and GB-A-2,294,755.

Fourth, the provision of the two filler openings 30, 34 in the upper manifold, one with the internal pipe 32, enables the anti-evaporation liquid to be employed and permits the apparatus to be topped-up with thermal transfer fluid without the anti-evaporation liquid being emulsified.

Fifth, the lower manifold 16, in addition to enabling cross-flow, also constitutes a pressure equalising pipe means as described in GB-A-2,294,755, with the consequent advantages provided thereby.

It will be understood that the present invention has been described above purely by way of example, and modifications of detail can be made within the scope of the invention as claimed.

For example, the housing 42 could be provided with, say, three instead of four primary circuits, but with room being left for a fourth such circuit to be fitted at a later time if required. It will also be understood that the number of primary circuits depends mainly on the thermal performance necessary for internal temperature control of the housing and also on the housing location itself. Any number up to, say, six (or even higher) might be appropriate according to the thermal design.

Also, each of the manifolds 14, 16 has been described above as being of one-piece welded construction; alternatively, either or both may be of modular construction. For example, the trunk 18 of the upper manifold 14 could be formed as four sections which are identical (apart from the provision of the filler openings 30, 34) and two end caps, with each section having a respective one of the branches 20a-d and a respective one of the branches 22a-d welded thereto. The manifold sections could then be connected to each other or to the end caps with releasable couplings. It would then be easily possible to add another section or remove one of the sections as needs dictated without having to replace the whole manifold. Alternatively, each manifold section could have two or more of each type of branch.

## Claims

1. An apparatus for controlling temperature within a housing, comprising:
a plurality of thermal storage devices (10a-d) for location within the housing (42), each for exchanging heat between itself and the interior of the housing and between itself and a thermal transfer fluid, and each having first and second ports providing an inlet and outlet for the passage of the thermal transfer fluid therethrough;
a plurality of heat exchangers (12a-d) for location outside the housing, each for exchanging heat between the thermal transfer fluid and the external environment, and each having first and second ports providing an inlet and outlet for the passage of the thermal transfer fluid therethrough;
a first pipe arrangement (24, 26a-d, 28a-d) connecting the first ports of the thermal storage devices to the first ports of the heat exchangers and directly to one another; and
a second pipe arrangement (18, 20a-d, 22a-d) having a trunk (18) and a plurality of branches (20a-d, 22a-d), each branch extending between the trunk and a respective one of the second ports so as to connect the second ports of the heat exchangers to the second ports of the thermal storage devices and directly to one another so as to enable cross-flow of the thermal transfer fluid between any of the heat exchangers and any of the thermal storage devices.

2. An apparatus as claimed in Claim 1, wherein the first pipe arrangement provides the lowest point for the thermal transfer fluid.

3. An apparatus as claimed in Claim 1 or 2, wherein the first pipe arrangement is in the form of a manifold having a trunk (24) and a plurality of branches (26a-d, 28a-d), one for each of the first ports.

4. An apparatus as claimed in any preceding claim, wherein the second pipe arrangement extends towards the top of the apparatus so as to function as an expansion and header reservoir for the thermal transfer fluid.

5. An apparatus as claimed in Claim 4, wherein the trunk of the second pipe arrangement has first and second filler openings (30, 34) in an upper surface thereof, the first filler opening (30) communicating with a pipe (32) which extends downwardly to an open lower end thereof.

6. An apparatus as claimed in any preceding claim, wherein the second pipe arrangement is in the form of a second manifold (18, 20a-d, 22a-d).

7. An apparatus as claimed in any preceding claim, wherein each of the branches (20a-d, 28a-d) for the heat exchanger ports is paired with and adjacent a respective one of the branches (22a-d, 26a-d) for a respective one of the thermal storage device ports.

8. An apparatus as claimed in Claim 7, wherein the branches of each pair are integral with at least a part of the, or the respective, trunk.

9. An apparatus as claimed in any preceding claim, wherein: the heat exchangers, thermal storage devices and the or each trunk are elongate; the heat exchangers and thermal storage devices being generally parallel to each other and generally at right angles to the or each trunk.

10. An apparatus as claimed in any preceding claim, wherein the internal cross-sectional area of the or each trunk is about the same as, or greater than, the internal cross-sectional area of each of the branches.

11. A housing (42) incorporating an apparatus as claimed in any preceding claim.
